(19) Europäisches Patentamt
European Patent Office
Office européen des brevets

(11) Publication number: **0 212 226 B1**

(12) # EUROPEAN PATENT SPECIFICATION

(45) Date of publication of the patent specification: **15.11.89**

(51) Int. Cl.⁴: **A01N 43/54**, A01N 25/04

(21) Application number: **86109555.2**

(22) Date of filing: **12.07.86**

(54) **Gel bait compositions for control of cockroaches.**

(30) Priority: **12.08.85 US 764363**

(43) Date of publication of application: **04.03.87 Bulletin 87/10**

(45) Publication of the grant of the patent: **15.11.89 Bulletin 89/46**

(84) Designated Contracting States: **AT BE CH FR GB IT LI LU NL SE**

(56) References cited:
**GB-A-2 070 430**
**US-A-4 320 130**

(73) Proprietor: **AMERICAN CYANAMID COMPANY, 1937 West Main Street P.O. Box 60, Stamford Connecticut 06904-0060(US)**

(72) Inventor: **Ong, Chungjian Jerry, 541 Wren Way, Somerville New Jersey 08876(US)**

(74) Representative: **Wächtershäuser, Günter, Dr., Tal 29, D-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

SUMMARY OF THE INVENTION

The invention is an insecticidal gel composition especially useful for the control of cockroaches, a method of preparing the composition and a method of its use. More particularly, the invention relates to insecticidal gel compositions comprising tetrahydro-5,5-dimethyl-2(1H)pyrimidinyl-{3-[4-(trifluoromethyl)-phenyl]-1-{2-[4- (trifluoromethyl)phenyl]ethenyl}-2-propenylidene}hydrazone as a toxicant, a $C_{17}$-$C_{19}$ unsaturated fatty acid, or a $C_7$-$C_{17}$ saturated fatty acid or a mixture of the saturated and unsaturated fatty acids, propylene glycol, propyl p-hydroxybenzoate, high fructose (55%) corn syrup, methyl p-hydroxybenzoate a gelling agent and water; the compositions having a viscosity of 1.0 to $2.5 \times 10^6$ centipoise as measured with a Brookfield viscometer Model RVT with helipath stand T-D or T-E spindle, rotated at 0.5 rpm. The insecticide which is active as a stomach poison, can be graphically illustrated by formula (I) below.

This application is a continuation-in-part of co-pending application Serial No. 06/764,363 filed August 12, 1985.

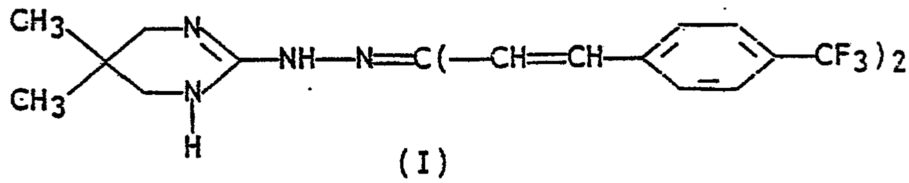

(I)

The formula I insecticide is disclosed and claimed in United States Patent No. 4,163,102 and its method of use is claimed in United States Patent No. 4,213,988, both of which are incorporated herein by reference. Insecticidal bait compositions of the abovenamed insecticide are disclosed in United States Patent No. 4,320,130, which describes solid corn based baits which are suitable for application over large areas for the control of insects.

The novel insecticidal gel compositions of the invention are suitable for application within and around cockroach habitats. This type of application requires compositions which possess physical properties which make them suitable for application as a bead of material in corners and hard to reach places within structures which are inhabited by cockroaches. Applications of this type may be accomplished with tubes of material or caulking gun type applicators which apply the composition as a bead of material.

The gel compositions for the control of cockroaches comprise on a weight basis 14% to 22% of the gellant, 0% to 0.5% propyl p-hydroxybenzoate, 0% to 30% propylene glycol, 0.5% to 6% of a fatty acid such as a $C_{17}$-$C_{19}$ unsaturated fatty acid, a $C_7$-$C_{17}$ saturated fatty acid or a mixture of said fatty acids, 1% to 5% of formula (I) insecticide, 10% to 40% high fructose (55%) corn syrup, 0% to 10% isopropyl alcohol, 0% to 0.5% methyl p-hydroxybenzoate and 25% to 60% of water wherein the compositions have water to gellant ratios of 1.5/1 to 3.0/1.

Preferred unsaturated fatty acids useful in the preparation of compositions of the invention are oleic acid, linoleic acid, linolenic acid and abietic acid. Preferred saturated fatty acids are caprylic; capric, lauric, myristic, palmitic and stearic acids or mixtures thereof. The gellant selected is a non-ionic surfactant of structure α-hydro-Ω-hydroxy-poly(oxyethylene)poly(oxypropylene)poly(oxyethylene) block copolymer having an average molecular weight 12,500, mp 56°C, Brookfield viscosity of 3100 at 77°C, and surface tension of a 0.1% aqueous solution:
40.6 dynes/cm (measured with a du Nouy tensiometer).

The above described compositions have been found to be highly effective for the control of cockroaches when applied within structures. Additionally, it has been found that compositions of the invention having viscosities of 1.5 to $2.2 \times 10^6$ centipoise at room temperature (approximately 25°C), which retain a viscosity equal to or greater than $1.0 \times 10^6$ centipoise at 45°C are suitable for application as a bead which adheres upon application and does not run or drip after application. A preferred composition for the control of cockroaches is comprised of 50.4% water, 20.0% corn syrup, 0.2% methyl p-hydroxybenzoate, 2.0% oleic acid, 2.05% formula (I) insecticide, 0.15% propyl p-hydroxybenzoate, 7.2% propylene glycol, 18.0% of gellant on a weight basis. This preferred composition has a water to gellant ratio 2.8/1, and maintains an acceptable viscosity profile at 25°C to 45°C over time as shown in Table I below.

TABLE I
Viscosity of preferred gel composition

| | Viscosity ($10^6$) centerpoise | | |
|---|---|---|---|
| | 25°C | 37°C | 45°C |
| Initial | 2.0 | 1.8 | 1.6 |
| One month at 45°C | 1.8 | 1.5 | 1.4 |
| Two months at 45°C | 1.8 | 1.7 | 1.5 |

Stable gel compositions of the invention may be prepared by admixing a homogeneous mixture comprising the required quantities of water, corn syrup, methyl p-hydroxybenzoate and 70% to 90% on a weight basis of the above described gellant; with a homogeneous mixture containing the required quantities of tetrahydro-5,5-dimethyl-2(1H)pyrimidinyl-{-[4-(trifluoromethyl)phenyl]-1-{2-[4-(trifluoromethyl)phenyl]-ethenyl}-2-propenylidene}hydrazone, a fatty acid such as a $C_{17}$-$C_{19}$ unsaturated fatty acid, a $C_7$-$C_{17}$ saturated fatty acid or a mixture of said fatty acids, propyl p-hydroxybenzoate isopropyl alcohol and propylene glycol until the final composition is homogeneous. The preparation may be conducted in a temperature range of 25°C to 95°C but temperatures below 80°C may require the use of heavy duty mixing equipment such as a double planatory mixer, or Versa Mix equipped with a homogenizer or the like since the composition may gel in this temperature range. When the preparation is conducted above 80°C the composition is a liquid. Upon completion of the preparation the composition which is either a liquid or gel, depending upon the temperature at which the preparation was conducted, may then be packaged. This procedure is suitable for the preparation of a variety of stable gel compositions as illustrated in Table II below.

TABLE II

| Component | % by weight |
|---|---|
| Water | 25.0-60.0 |
| Corn syrup | 10.0-40.0 |
| Methyl p-hydroxybenzoate | 0.0-0.5 |
| Oleic acid | 0.5-6.0 |
| Insecticidal toxicant | 1.0-3.0 |
| Propyl p-hydroxybenzoate | 0.0-0.5 |
| Propylene glycol | 0.0-30.0 |
| Isopropyl alcohol | 0.0-10.0 |
| Gellant | 14.0-22.0 |
| Water to gellant ratio | 1.5-3.0 |

The compositions prepared by the above procedure may then be applied within or about a structure which is infested with roaches. Use of these compositions has particular advantage, since such method of distribution poses little or no hazard to humans or animals that may frequent the infested area.

The invention is further illustrated by the examples set forth below. These examples are provided only by way of illustration and are not intended to be limiting.

EXAMPLE 1

Preparation of gel compositions

A premix is prepared by adding the solid gellant α-hydro-Ω-hydroxy-poly(oxyethylene)poly(oxypropylene)poly(oxyethylene) block copolymer, average molecular weight 12,500; mp 56°C; Brookfield viscosity of 3100 at 77°C; surface tension of a 0.1% aqueous solution: 40.6 dynes/cm (measured with a du Nouy tensiometer (160 g, 16%), to a homogeneous mixture of water (504 g, 50.4%), corn syrup (200 g, 20%), and methyl p-hydroxybenzoate (2 g, 0.2%), maintained at 85°C to 90°C in an evacuated and inerted nitrogen atmosphere. The resulting mixture is stirred at 85°C to 90°C until a homogeneous mixture is formed. A second homogeneous mixture is prepared by adding the formula (I) hydrazone (20.50 g, 2.05%) to a stirred solution of oleic acid (20 g, 2%), propyl p-hydroxybenzoate (15 g, 0.15%), gellant (20 g, 2%) in propylene glycol (72 g, 7.2%) at 50°C to 60°C under a nitrogen atmosphere. This mixture is then

heated to 85°C and added to the stirred homogeneous first premix maintained at 85°C to 90°C under a nitrogen atmosphere. After stirring until the composition is homogeneous, it is transferred to suitable containers, inerted with nitrogen and sealed.

Utilizing the above procedure and varying the amounts of propylene glycol and water, yields insecticidal gel bait compositions of varying water to gellant ratios, having acceptable gel ranges and viscosities as illustrated in Table III below.

TABLE III
Stable gel ranges for compositions containing 18% by weight gellant

| Composition | water/gellant | Gel range °C | Viscosity ($10^6$) @ 25°C |
|---|---|---|---|
| 1 | 2.3 | –20 to 102 | 2.1 |
| 2 | 2.4 | –16 to 100 | 2.0 |
| 3 | 2.5 | –12 to 98 | 2.0 |
| 4 | 2.6 | –10 to 94 | 1.9 |
| 5 | 2.7 | –6 to 90 | 1.75 |
| 6 | 2.8 | –4 to 86 | 1.6 |
| 7 | 2.9 | –1 to 83 | 1.5 |
| 8 | 3.0 | 1 to 80 | 1.4 |

EXAMPLE 2

Physical stability of gel compositions

The physical stability of composition 2 prepared in Example 1, having an initial viscosity of $2.0x10^6$ centipoise at 25°C is determined by storing aliquots at 25°C and 45°C and measuring the viscosities of the samples at 25°C, 37°C and 45°C at one month intervals (Brookfield viscometer Model RVT with helipath stand, TD spindle). The results of these experiments which are summarized in Table IV demonstrate the physical stability of the gel compositions with respect to maintaining desirable viscosities.

TABLE IV
Viscosity stability of gel composition

| | Viscosity ($10^6$) centipoise | | |
|---|---|---|---|
| | 25°C | 37°C | 45°C |
| Initial | 2.0 | 1.8 | 1.6 |
| One month 45°C | 1.8 | 1.5 | 1.4 |
| Two months 45°C | 1.8 | 1.7 | 1.5 |

EXAMPLE 3

Efficacy of gel compositions

Samples of gel composition 2 prepared as described in Example 1 are applied as a 1/2 cm to 1 cm dab to the inside bottom surfaces of 30 mL clear plastic cups with holes cut in the sides to allow entry of the insects. One treated cup is placed in an inverted position in each one gallon cylindrical container along with a water source containing ten adult male German cockroaches (three replicates per treatment). Each container is covered with a piece of nylon netting held in place by a cardboard ring. Counts of live and dead cockroaches are made daily for four days and are reported as percent mortality compared to untreated controls. The results of these experiments which are summarized in Table V below demonstrate the efficacy of gel compositions of the above invention for control of cockroaches.

TABLE V
Efficacy of gel compositions against German cockroaches

| | Percent mortality (average of three replicates) Days exposure to bait | | | |
|---|---|---|---|---|
| | 1 | 2 | 3 | 4 |
| Gel compositions | 0 | 67 | 100 | 100 |
| Untreated control | 0 | 0 | 0 | 0 |

EXAMPLE 4

Preparation and evaluation of formulations to determine the acceptability of the physical properties thereof.

Gel compositions are prepared in accordance with the procedure of Example 1 and the physical properties thereof determined by the procedure of Example 2.

Composition of Test Formulations

| Ingredient | A | B | C |
|---|---|---|---|
| Water | 50.4 | 56 | 42.6 |
| Corn Syrup | 20.0 | – | 30.0 |
| Methyl p-hydroxybenzoate | 0.2 | – | 0.2 |
| Fatty Acid | 6.0 Mixture | 2.0 Oleic Acid | 2.0 Oleic Acid |
| Insecticide | 2.05 | 2.0 | 2.0 |
| Propylene glycol | 3.2 | 10.0 | 7.0 |
| Propyl p-hydroxybenzoate | 0.15 | – | 0.15 |
| Surfactant (Polawax) | – | 5 | 2 |
| Gellant | 18 | 25 | 14 |
| Viscosity @ R.T. | – | 3.2 | 0.3 |
| $10^6$ cps 37°C | – | 2.8 | 0.15 |
| 45°C | – | 1.6 | 0.07 |

In formulation A the fatty acid mixture has the following composition: capric acid 1%, lauric acid 55%, myristic acid 22%, palmitic acid 11%, stearic acid 3%, oleic acid 6% and lenoleic acid 2%.

The gellant in formulations A, B and C is α-hydro-Ω-hydroxy-poly(oxyethylene)poly(oxyproprylene)-poly (oxyethylene) block copolomer, average molecular weight 12,500, mp 56°C, Brookfield viscosity of 3100 at 77°C.

The insecticide in formulations A, B and C is tetrahydro-5,5-dimethyl-2(1H)-pyrimidinyl-{3-[4-(trifluoromethyl)phenyl]-1-{2-[4-(trifluoromethyl)phenyl]ethenyl}-2-propenylidene}hydrazone.

In formulations B and C, polawax surfactant is a nonionic ethoxylated fatty alcohol.

Examination of the gel formulations A, B and C, show that formulation A is an acceptable formulation having the proper consistency for ready application from a gel cartridge. This formulation forms an excellent gel bead that adheres to wood, polymer, concrete and metal surfaces and remains in place under normal conditions after application without running, slipping or smearing across to which it has been applied.

Formulation B has an unacceptable consistency. It is too thick to apply from a gel cartridge. The viscosity is $3.2 \times 10^6$ centipoise at room temperature.

Formulation C is also unsatisfactory. It is much too fluid to permit application as a gel bead from a gel cartridge. The viscosity of this formulation is $0.3 \times 10^6$ centipoise at room temperature.

## Claims

1. An insecticidal gel composition comprising on a weight basis 14% to 22% of the gellant α-hydro-Ω-hydroxy-poly(oxyethylene)poly(oxypropylene)poly(oxyethylene) block copolymer having an average molecular weight 12,500, mp 56°C, Brookfield viscosity of 3100 at 77°C, and surface tension of a 0.1% aqueous solution: 40.6 dynes/cm; 0% to 0.5% propyl p-hydroxybenzoate; 0% to 30% propylene glycol; 0.5% to 6% of a $C_{17}$-$C_{19}$ unsaturated fatty acid; a $C_7$-$C_{17}$ saturated fatty acid or a mixture of the fatty acids; 1% to 5% of formula (I) insecticide:

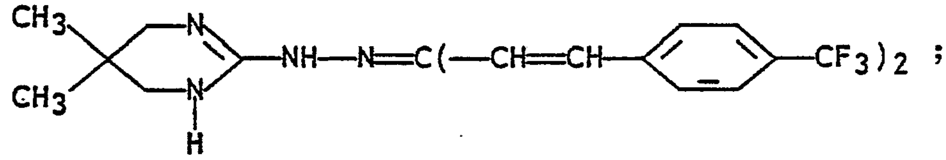

(I)

10% to 40% high fructose (55%) corn syrup; 0% to 10.0% isopropyl alcohol; 0% to 0.5% methyl p-hydroxbenzoate; and 25% to 60% of water; the composition having water to gellant ratios of 1.5/1 to 3.0/1 and a viscosity of 1.0 to $2.5x10^6$ centipoise in a temperature range of 25°C. to 45°C.

2. A composition according to Claim 1 having a viscosity of 1.5 to $2.5x10^6$ centipoise at room temperature.

3. A composition according to Claim 2 comprising 50.4% water, 20.0% corn syrup, 0.2% methyl p-hydroxybenzoate, 2.0% oleic acid, 2.05% formula (I) insecticide, 0.15% propyl p-hydroxybenzoate, 7.2% propylene glycol, 18.0% of gellant on a weight basis.

4. A method for the preparation of an insecticidal gel composition comprising, admixing at 25°C to 95°C on a weight basis 14% to 22% of the gellant α-hydro-Ω-hydroxy-poly(oxyethylene)poly(oxypropylene)poly(oxyethylene) block copolymer having an average molecular weight 12,500, mp 56°C, Brookfield viscosity of 3100 at 77°C, surface tension of a 0.1% aqueous solution: 40.6 dynes/cm; 0% to 0.5% propyl p-hydroxybenzoate; 0% to 30% propylene glycol; 0.5% to 6% of a $C_{17}$-$C_{19}$ unsaturated fatty acid; a $C_7$-$C_{17}$ saturated fatty acid or a mixture of the fatty acids; 1% to 5% of formula (I) insecticide

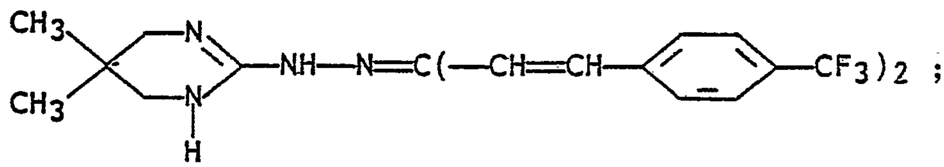

(I)

10% to 40% high fructose (55%) corn syrup; 0% to 10% isopropyl alcohol; 0% to 0.5% methyl p-hydroxybenzoate and 25% to 60% of water to obtain a composition having water to gellant ratios of 1.5/1 to 3.0/1 and a viscosity of 1.0 to $2.5x10^6$ centipoise in a temperature range of 25°C to 45°C.

5. A method according to Claim 4 wherein the insecticidal gel composition has a viscosity of 1.5 to $2.2x10^6$ centipoise at room temperature.

6. A method according to Claim 5 for preparing gel composition comprising, admixing on a weight basis 50.4% water, 20.0% corn syrup, 0.2% methyl p-hydroxybenzoate, 2.0% oleic acid, 2.05% formula (I) insecticide, 0.15% propyl p-hydroxybenzoate, 7.2% propylene glycol, and 18.0% of gellant.

7. A method for the control of cockroaches comprising using an insecticidal gel composition according to Claim 1 in an area where cockroaches will have access to the composition.

8. A method according to Claim 7 comprising using a composition of 50.4% water, 20.0% corn syrup, 0.2% methyl p-hydroxybenzoate, 2.0% oleic acid, 2.05% insecticide, 0.15% propyl p-hydroxybenzoate, 7.2% propylene glycol and 18.0% of gellant on a weight basis.

## Patentansprüche

1. Insektizide Gel-Zusammensetzung, umfassend auf Gewichtsbasis 14% bis 22% des Geliermittels α-Hydro-Ω-hydroxypoly(oxyethylen)poly(oxypropylen)poly(oxyethylen)-Block-Copolymerisat mit einem durchschnittlichen Molekulargewicht von 12.500, Fp. 56°C, Brookfield-Viskosität 3100 bei 77°C und

Oberflächenspannung einer 0,1%-igen wäßrigen Lösung: 40,6 dyn/cm; 0% bis 0,5% Propyl-p-hydroxybenzoat; 0% bis 30% Propylenglycol; 0,5% bis 6% einer $C_{17}$–$C_{19}$-ungesättigten Fettsäure; einer $C_7$–$C_{17}$-gesättigten Fettsäure oder einer Mischung der Fettsäuren; 1% bis 5% des Insektizids der Formel (I)

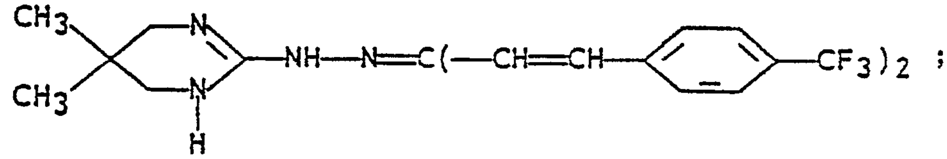

(I)

10% bis 40% Maissirup vom Typ mit hohem (55%) Fructosegehalt; 0% bis 10,0% Isopropylalkohol; 0% bis 0,5% Methyl-p-hydroxybenzoat; und 25% bis 60% Wasser; wobei die Zusammensetzung Wasser zu Geliermittelverhältnisse von 1,5/1 bis 3,0/1 aufweist und in einem Temperaturbereich von 25°C bis 45°C eine Viskosität von 1,0 bis 2,5x10$^6$ cps hat.

2. Zusammensetzung gemäß Anspruch 1 mit einer Viskosität von 1,5 bis 2,5x10$^6$ cps bei Zimmertemperatur.

3. Zusammensetzung gemäß Anspruch 2, umfassend 50,4% Wasser, 20,0% Maissirup, 0,2% Methyl-p-hydroxybenzoat, 2,0% Ölsäure, 2,05% des Insektizids der Formel (I), 0,15% Propyl-p-hydroxybenzoat, 7,2% Propylenglycol, 18,0% des Geliermittels auf Gewichtsbasis.

4. Verfahren zur Herstellung einer insektiziden Gel-Zusammensetzung, umfassend das Vermischen bei 25°C bis 95°C von auf Gewichtsbasis 14% bis 22% des Geliermittels α-Hydro-Ω-hydroxy-poly(oxyethylen)poly(oxypropylen)poly(oxyethylen)-Block-Copolymerisat mit einem durchschnittlichen Molekulargewicht von 12.500, Fp. 56°C, Brookfield-Viskosität 3100 bei 77°C und Oberflächenspannung einer 0,1%-igen wäßrigen Lösung: 40,6 dyn/cm; 0% bis 0,5% Propyl-p-hydroxybenzoat; 0% bis 30% Propylenglycol; 0,5% bis 6% einer $C_{17}$–$C_{19}$-ungesättigten Fettsäure, einer $C_7$–$C_{17}$-gesättigten Fettsäure oder einer Mischung der Fettsäuren; 1% bis 5% des Insektizids der Formel (I)

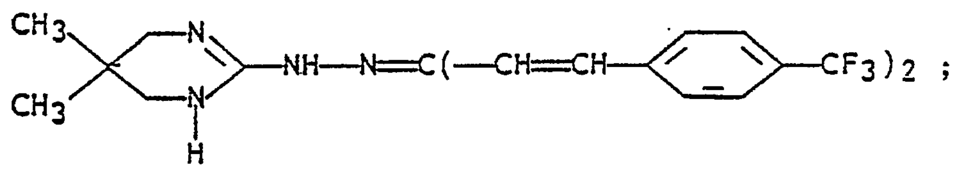

(I)

10% bis 40% Maissirup vom Typ mit hohem (55%) Fructosegehalt, 0% bis 10,0% Isopropylalkohol; 0% bis 0,5% Methyl-p-hydroxybenzoat; und 25% bis 60% Wasser; um eine Zusammensetzung mit Wasser zu Geliermittelverhältnissen von 1,5/1 bis 3,0/1 und einer Viskosität von 1,0 bis 2,5x10$^6$ cps in einem Temperaturbereich von 25°C bis 45°C zu erhalten.

5. Verfahren gemäß Anspruch 4, wobei die insektizide Gel-Zusammensetzung eine Viskosität von 1,5 bis 2,5x10$^6$ cps bei Zimmertemperatur aufweist.

6. Verfahren gemäß Anspruch 5 zur Herstellung einer Gel-Zusammensetzung, umfassend das Vermischen auf Gewichtsbasis von 50,4% Wasser, 20,0% Maissirup, 0,2% Methyl-p-hydroxybenzoat, 2,0% Ölsäure, 2,05% des Insektizids der Formel (I), 0,15% Propyl-p-hydroxybenzoat, 7,2% Propylenglycol und 18,0% des Geliermittels.

7. Verfahren zur Bekämpfung von Küchenschaben, umfassend die Verwendung einer insektiziden Gel-Zusammensetzung gemäß Anspruch 1 in einem Bereich, wo die Küchenschaben Zugang zu der Zusammensetzung haben.

8. Verfahren gemäß Anspruch 7, umfassend die Verwendung einer Zusammensetzung von 50,4% Wasser, 20,0% Maissirup, 0,2% Methyl-p-hydroxybenzoat, 2,0% Ölsäure, 2,05% des Insektizids der Formel (I), 0,15% Propyl-p-hydroxybenzoat, 7,2% Propylenglycol und 18,0% des Geliermittels auf Gewichtsbasis.

## Revendications

1. Composition de gel insecticide, comprenant, en poids de 14% à 22% de l'agent gélifiant à base de copolymère séquencé d'α-hydro-Ω-hydroxypoly(oxyéthylène)poly(oxypropylène)poly(oxyéthylène), ayant un poids moléculaire moyen de 12 500, un point de fusion de 56°C, une viscosité Brookfield de 3100 à 77°C, et une tension superficielle à 0,1% en solution aqueuse de 40,6 dynes/cm; de 0% à 0,5% de p-hydroxybenzoate de propyle; de 0% à 30% de propylène glycol; de 0,5% à 6% d'un acide gras insaturé en $C_{17}$ à $C_{19}$, d'un acide gras saturé en $C_7$ à $C_{17}$ ou d'un mélange de ces acides gras; de 1% à 5% d'insecticide de formule (I):

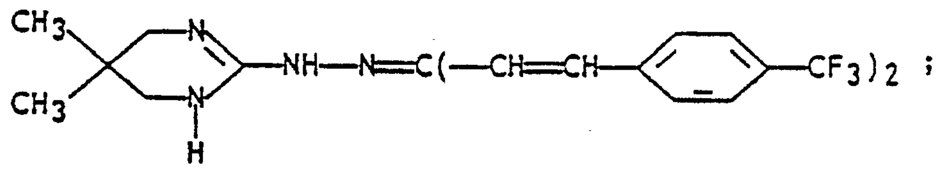

(I)

de 10% à 40% de sirop de maïs à teneur élevée en fructose (55%); de 0% à 10,0% d'alcool isopropylique; de 0% à 0,5% de p-hydroxybenzoate de méthyle; et de 25% à 60% d'eau; la composition ayant des rapports de l'eau à l'agent gélifiant, de 1,5/1 à 3,0/1 et une viscosité de 1,0 à 2,5 × $10^6$ cP dans une plage de température allant de 25°C à 45°C.

2. Composition selon la revendication 1, ayant une viscosité de 1,5 à 2,5 × $10^6$ cP à la température ambiante.

3. Composition selon la revendication 2, comprenant, en poids, 50,4% d'eau, 20,0% de sirop de maïs, 0,2% de p-hydroxybenzoate de méthyle, 2,0% d'acide oléique, 2,05% d'insecticide de formule (I), 0,15% de p-hydroxybenzoate de propyle, 7,2% de propylène glycol et 18,0% d'agent gélifiant.

4. Procédé de préparation d'une composition de gel insecticide, dans lequel on mélange à une température de 25°C jusqu'à 95°C, de 14% à 22% de l'agent gélifiant à base de copolymère séquencé d'α-hydro-Ω-hydroxypoly(oxyéthylène)poly(oxypropylène)poly(oxyéthylène), ayant un poids moléculaire moyen de 12 500, un point de fusion de 56°C, une viscosité Brookfield de 3100 à 77°C, et une tension superficielle à 0,1% en solution aqueuse, de 40,6 dynes/cm; de 0% à 0,5% de p-hydroxybenzoate de propyle; de 0% à 30% de propylène glycol; de 0,5% à 6% d'un acide gras insaturé en $C_{17}$ à $C_{19}$, d'un acide gras saturé en $C_7$ à $C_{17}$, ou d'un mélange de ces acides gras; de 1% à 5% d'insecticide de formule (I):

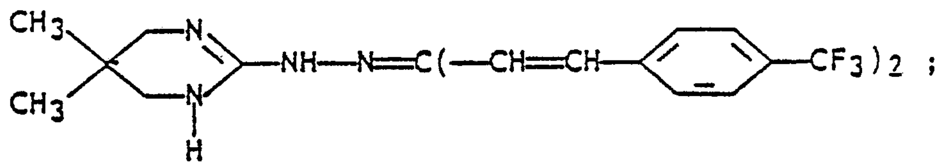

(I)

de 10% à 40% de sirop de maïs à teneur élevée en fructose (55%); de 0% à 10% d'alcool isopropylique; de 0% à 0,5% de p-hydroxybenzoate de méthyle; et de 25% à 60% d'eau, selon des proportions en poids, pour obtenir une composition ayant des rapports de l'eau à l'agent gélifiant, de 1,5/1 à 3,0/1 et une viscosité de 1,0 à 2,5 × $10^6$ cP dans une plage de température allant de 25°C à 45°C.

5. Procédé selon la revendication 4, dans lequel la composition de gel insecticide a une viscosité de 1,5 à 2,2 × $10^6$ cP à la température ambiante.

6. Procédé selon la revendication 5 pour la préparation d'une composition de gel, dans lequel on mélange 50,4% d'eau, 20,0% de sirop de maïs, 0,2% de p-hydroxybenzoate de méthyle, 2,0% d'acide oléique, 2,05% d'insecticide de formule (I), 0,15% de p-hydroxybenzoate de propyle, 7,2% de propylène glycol et 18,0% d'agent gélifiant, selon des proportions en poids.

7. Procédé de lutte contre les blattes, dans lequel on utilise une composition de gel insecticide selon la revendication 1 dans une zone où les blattes ont accès à la composition.

8. Procédé selon la revendication 7, dans lequel on utilise une composition, comprenant, en poids, 50,4% d'eau, 20,0% de sirop de maïs, 0,2% de p-hydroxybenzoate de méthyle, 2,0% d'acide oléique, 2,05% d'insecticide, 0,15% de p-hydroxybenzoate de propyle, 7,2% de propylène glycol et 18,0% d'agent gélifiant.